# EUROPEAN PATENT APPLICATION

(11) **EP 1 973 249 A2**
(43) Date of publication of application: **24.09.2008**
(21) Application number: 08102692.4
(22) Date of filing: 17.03.2008
(51) Int. Cl.: H04H 20/93, H04H 60/07, H04H 60/72

(54) **Digital broadcast transmission/reception system and digital broadcast transmission/reception method**

(30) Priority: 22.03.2007 KR 20070028071
(71) Applicant: LG Electronics Inc., Seoul 150-721 (KR)
(72) Inventor: Hong, Ho Taek, LG Electronics Inc., Seoul 137-724 (KR); Kim, Jin Pil, LG Electronics Inc., Seoul 137-724 (KR)
(74) Representative: Cabinet Plasseraud

(57) **Abstract**

A digital broadcast transmission/reception method and a digital broadcast transmission/reception system are disclosed. The digital broadcast transmission/reception method includes requesting connection information including information about a server storing contents guide information based on priorities, transmitting the connection information, receiving the connection information and accessing the server storing the priority-based contents guide information, using the connection information, and receiving the priority-based contents guide information from the accessed server.

## Description

This application claims the priority benefit of Korean Application No. 10-2007-0028071, filed on March 22, 2007, which is hereby incorporated by reference as if fully set forth therein.

### BACKGROUND OF THE INVENTION

### Field of the Invention

The present invention relates to a digital broadcast transmission/reception system and a digital broadcast transmission/reception method.

### Discussion of the Related Art

Existing television (TV) services have been provided in such a manner that contents produced by broadcasting stations are transmitted through radio transmission media, such as terrestrial waves, cables or satellites, and the user watches the transmitted contents through a TV receiver capable of receiving the transmitted contents via the respective transmission media.

However, as digital TV technologies based on digital broadcasting are developed and are commercially available, breaking from existing analog broadcasting, various services, such as real-time broadcasts, Contents on Demand (CoD), games and news, can be provided to the user using an Internet network connected to each home, besides the existing transmission media.

An Internet Protocol TV (IPTV) may be taken as an example of the provision of services using the Internet network. The IPTV refers to providing information services, moving image contents, broadcasts, etc. to a TV using a very high-speed Internet network.

The provision of services using the Internet network, such as the IPTV, is identical to general cable broadcasting or satellite broadcasting in that it provides services such as broadcast contents including videos, but has a salient feature in that it additionally has bidirectionality. Also, differently from general terrestrial broadcasting, cable broadcasting or satellite broadcasting, the IPTV enables the user to watch a desired service at his/her convenient time.

For various services of this IPTV, there is a need for a contents guide service that provides detailed information, a connection location, service provider information, a service channel, etc. about each content. A Broadband Contents Guide (BCG) may be taken as an example of the contents guide service. The contents guide such as the BCG is transmitted to a receiver over the Internet network and then provided to the user.

However, for the transmission of the contents guide such as the BCG, a conventional transmission system transmits the contents guide as single data at a time irrespective of the current time. For this reason, in the conventional system, information of the contents guide is transmitted and received at one time, thereby increasing a burden on the Internet network, making it difficult for the receiver to search for desired data and reducing the processing speed of the receiver.

### SUMMARY OF THE INVENTION

Accordingly, the present invention is directed to a digital broadcast transmission/reception system and digital broadcast transmission/reception method that substantially obviate one or more problems due to limitations and disadvantages of the related art.

An object of the present invention is to provide a digital broadcast transmission/reception system and digital broadcast transmission/reception method which can transmit and receive data such as contents guide information within a short time.

Another object of the present invention is to provide a digital broadcast transmission/reception system and digital broadcast transmission/reception method which can transmit and receive data sequentially according to priorities.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a digital broadcast transmission system includes a first server for transmitting connection information about a server storing contents guide information based on priorities and a second server for transmitting the priority-based contents guide information in any one of a unicast mode and a multicast mode.

The connection information may be included in a Broadband Contents Guide (BCG) discovery record. The second server may transmit contents guide information of a high priority, among the priority-based contents guide information, in the multicast mode and transmit contents guide information of a low priority, among the priority-based contents guide information, in the unicast mode. The information about the priority of the contents guide information transmitted in the multicast mode may be included in a header area of a Digital Video Broadcasting Service Discovery & Selection Transport Protocol (DVBSTP). The connection information may include information about a transmission cycle of the contents guide information transmitted in the multicast mode.

The connection information may include connection information about two or more servers providing the contents guide information according to the priorities, respectively.

In another aspect of the present invention, a digital broadcast reception system includes a network interface for transmitting and receiving signals to/from a network; an Internet Protocol (IP) manager for transmitting and receiving an IP packet among to/from the network interface, a service discovery manager for obtaining, from the IP packet received by the IP manager, connection information about a server storing contents guide information based on priorities, and receiving the contents guide information from the server according to the priorities, a controller for receiving the priority-based contents guide information from the service discovery manager; and a display for displaying the priority-based contents guide information received by the controller.

In a case of contents guide information of a high priority, among the priority-based contents guide information, the service discovery manager may register the digital broadcast reception system with a server providing the contents guide information of the high priority and receive the contents guide information of the high priority from the server in a multicast mode.

The connection information may include at least one of a start time and end time of the contents guide information.

In another aspect of the present invention, a digital broadcast reception method includes receiving connection information including information about a server storing contents guide information based on priorities, accessing the server storing the priority-based contents guide information, using the connection information; and receiving the priority-based contents guide information from the accessed server.

The digital broadcast reception method may further includes registering a receiver receiving contents guide information of a high priority, among the priority-based contents guide information, with a server providing the contents guide information of the high priority and receiving the contents guide information of the high priority in a multicast mode.

The digital broadcast reception method may further comprise: requesting contents guide information of a low priority, among the priority-based contents guide information, from a server providing the contents guide information of the low priority; and receiving the contents guide information of the low priority in a unicast mode.

In a further aspect of the present invention, a digital broadcast transmission/reception method includes requesting connection information including information about a server storing contents guide information based on priorities, transmitting the connection information, receiving the connection information, and accessing the server storing the priority-based contents guide information, using the connection information; and receiving the priority-based contents guide information from the accessed server.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a schematic view of a system for transmitting contents guide information;

FIG. 2 is a view showing an example of a BCG discovery record including discovery information based on priorities;

FIG. 3 is a view showing an example of an extensible Markup Language (XML) expression of a BCG discovery record including discovery information based on priorities;

FIG. 4 is a view showing an example of a syntax of a DVBSTP including priority information;

FIG. 5 is an example of a block diagram showing the configuration of a receiver for receiving and processing contents guide information based on priorities,; and

FIG. 6 is an example of a flowchart illustrating a process of processing contents guide information based on priorities.

### DESCRIPTION OF SPECIFIC EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

Hereinafter, in order to facilitate the description of the present invention, an IPTV for transmitting and receiving broadcast signals over the Internet will be taken as an example. Also, BCG data will be taken as an example of data transmittable according to priorities. The embodiments to be described below will be similarly applied to general data, for example, data transmittable in an XML format, besides the BCG data. In addition, although the priorities of BCG data units will be described for illustrative purposes to be classified according to a schedule, they may be changed according to a provider's settings.

An Internet Protocol television (IPTV) system, which is one example of a system providing contents using the Internet, can be broadly divided into a server, a network, and an IP broadcast receiver.

The server of the IPTV system includes servers taking charge of various functions, such as a service discovery server for providing service discovery information (called, for example, a Service Discovery & Selection (SD&S) server), a streaming server, a Broadband Contents Guide (BCG) server for transmitting information about contents, a customer information server, and a payment information server.

The streaming server, among these servers, transmits moving image data encoded in Moving Picture Experts Group (MPEG)2 or MPEG4 over the network using a Real-Time Transport Protocol (RTP: RFC1889) and an RTP Control Protocol (RTCP: RFC3605).

The streaming server can also control reproduction of a moving image stream to some degree through a function called Network Trick Play, including Pause, Replay, Stop, etc., using a Real-Time Streaming Protocol (RTSP: RFC2326).

The BCG server, among the above servers, can provide contents guide information including information related to contents. The BCG server stores BCG data units including schedule information about contents, and provides the stored BCG data units to the IP broadcast receiver. The BCG data units include stream connection information based on the RTSP/RTP, and a direct connection to the streaming server may thus be made using information obtained from the BCG data units.

The service discovery server, among the above servers, provides the receiver with connection information, reproduction information, etc. about servers providing various services such as broadcasting, Video On Demand (VOD), game and BCG.

The network of the IPTV system includes an Internet-based network, and gateways. The gateways perform multicast group management using an Internet Group Management Protocol (IGMP), etc., Quality of Service (QoS) management and so forth, as well as general data transfer.

The receiver of the IPTV system refers to a receiver capable of receiving data transmitted over the Internet-based network and providing the received data to the user. The receiver may be, for example, an IPTV settop, homenet gateway, or IPTV-embedded TV.

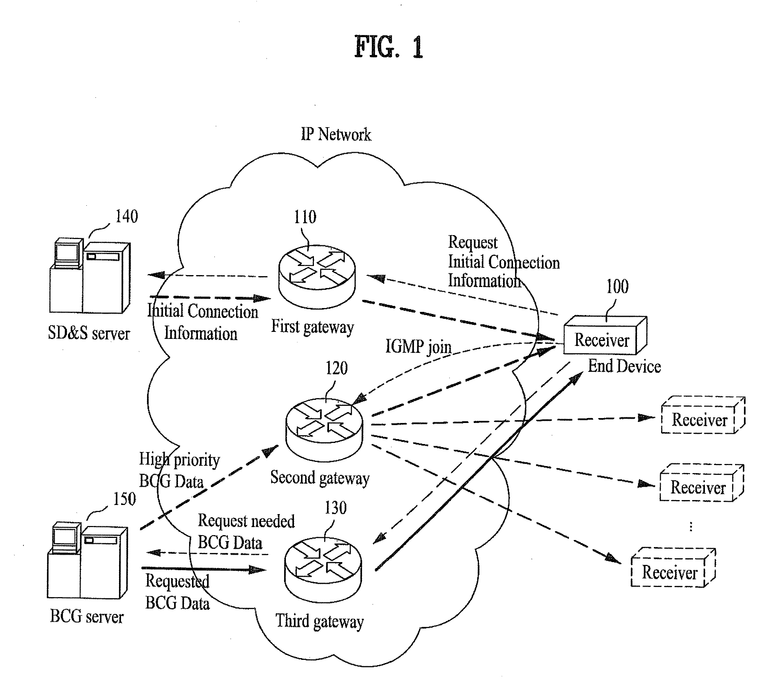

FIG. 1 is a schematic view of a system for transmitting contents guide information according to priorities. This system includes a receiver 100, first gateway 110, second gateway 120, third gateway 130, service discovery server 140, and BCG server 150.

If the receiver 100 is booted, then it requests initial connection information of the service discovery server 140. The service discovery server 140 can provide the receiver 100 with connection information, reproduction information, etc. about various servers providing services.

Accordingly, the receiver 100 can gain access to the service discovery server 140 through the first gateway 110 to request and receive initial connection information about various servers from the service discovery server 140.

The request and transmission of the initial connection information between the receiver 100 and the service discovery server 140 are based on a unicast mode (pull mode). The first gateway 110 can support the unicast mode.

Connection information about the BCG server 150 may also be included in the connection information transmitted from the service discovery server 140. The BCG server 150 stores BCG data, which is one example of a contents guide, and provides the stored BCG data to the receiver 100. When there is a change in information about contents, the BCG server 150 updates the stored BCG data.

When the service discovery server 140 transmits the connection information about the BCG server 150, it transmits an access method and access address information which are differentiated according to priorities of BCG data units. The access method may be, for example, a push mode or pull mode.

For example, the BCG server 150 may transmit BCG data units of higher priorities to the receiver 100 in a multicast mode (push mode), and transmit BCG data units of lower priorities to the receiver 100 in the unicast mode (pull mode).

The unicast mode is a mode where one sender transmits data to one recipient in a 1:1 manner. That is, if a receiver requests data of a server, the server transmits the data to the receiver in response to the request. The multicast mode is a mode where data is transmitted to a specific group of recipients. In this mode, a large amount of data can be transmitted to a plurality of pre-registered receivers at one time.

The service discovery server 140 transmits the priority-based access method and access information about the BCG server 150 to the receiver 100.

In the case where signals are transmitted and received based on Digital Video Broadcasting over IP (DVB-IP), the service discovery server 140 transmits a BCG discovery record including the connection information about the BCG server 150 to the receiver 100.

For provision of service discovery information (for example, SD&S information) in the DVB-IP, a DVB SD&S Transport Protocol (DVBSTP) is used in the multicast mode and a HyperText Transport Protocol (HTTP) is used in the unicast mode. Accordingly, the service discovery server 140 uses the HTTP because it transmits the BCG discovery record including the BCG connection information in the unicast mode.

The receiver 100 analyzes the BCG connection information included in the BCG discovery record and recognizes the BCG server 150 access method and access information based on priorities of BCG data units stored in the BCG server 150, as a result of the analysis.

The BCG server 150 can transmit BCG data units differentially according to priorities. The priority levels, the boundaries of the levels for the differential data transmission, and access addresses for respective transmissions of BCG data units based on the levels can be determined by a service provider, etc.

For example, the BCG server 150 transmits BCG data units of lower priorities using the unicast mode (pull mode) in response to the user's request, and periodically transmits BCG data units of higher priorities using the multicast mode (push mode). At this time, the data transmission period can be adjusted according to priority levels. That is, data can be transmitted at a shorter period when it has a higher priority level. Also, access addresses may be determined differently according to the transmission modes.

In the multicast mode, data can be transmitted using the DVBSTP, and, in the unicast mode, data can be transmitted using the HTTP.

For example, the BCG data priorities may be determined based on importance of information provided or closeness thereof to the current time. In the case where the BCG data priorities are determined based on closeness of information to the current time, a BCG data unit regarding a service provided at the current time has a highest priority, and BCG data units regarding services provided at times farther from the current time have lower priorities.

For example, the BCG data priorities may be classified into 'now', 'next' and 'other schedule' according to time schedule of a content which the BCG data provides. BCG data regarding a service provided at the current time has the 'now' level, which is a highest priority. BCG data regarding a service provided just next has the 'next' level, which is a priority lower than the 'now' level. BCG data regarding services other than the service provided at the current time and the service provided just next have the 'other schedule' level, which is a priority lower than the 'now' level and the 'next' level.

In the case where the priorities are classified in the order as stated above, BCG data units of the 'now' and 'next' levels can be transmitted in the multicast mode and BCG data units of the remaining 'other schedule' level can be transmitted in the unicast mode. In this case, the BCG data of the 'now' level can be transmitted at a shorter period than the BCG data of the 'next' level.

Alternatively, only BCG data of the 'now' level may be transmitted in the multicast mode and BCG data of the remaining 'next' and 'other schedule' levels may be transmitted in the unicast mode. It should be noted here that the boundaries of the levels for the differential data transmission based on the priorities are not fixed, but may be changed according to different embodiments.

On the other hand, BCG data may be defined to have a higher priority when it is in a time interval closer to the current time. That is, BCG data may be divided into BCG data in a plurality of time intervals each having a predetermined time unit, and BCG data may be defined to have a higher priority when it is in a time interval closer to the current time.

For example, in the case where BCG data is divided into BCG data of 128 levels by three hours, the BCG data priorities may be defined to correspond to an Event Information Table (EIT) of a Program and System Information Protocol (PSIP).

In the case where the priorities are classified in the order as stated above, BCG data of up to a certain level can be transmitted in the multicast mode and BCG data of the remaining levels can be transmitted in the unicast mode. Also, in the multicast mode, BCG data can be transmitted at different transmission periods by levels. For example, BCG data in a time interval closer to the current time may be transmitted at a shorter period and BCG data in a time interval farther from the current time may be transmitted at a longer period. The boundaries of the levels for the differential data transmission based on the priorities or the transmission periods may be changed according to different embodiments.

The BCG server 150 may include a plurality of servers for transmitting BCG data units according to the transmission modes. These servers may have different access addresses. Even in the case of transmitting BCG data in the same mode, the servers may have different access addresses based on priorities.

The receiver 100 receives BCG data transmitted from the BCG server 140 using the priority-based BCG server 150 access method and access information included in the BCG discovery record transmitted from the service discovery server 140.

In the case where the BCG server 140 transmits BCG data in the multicast mode, the receiver 100 registers itself with a multicast address of the BCG server 150 using an Internet Group Management Protocol (IGMP). Receivers registered with the multicast address can receive the BCG data from the BCG server 150 in the multicast mode.

Also, in the case where information about priorities of BCG data is contained in a header area of the DVBSTP, which is a protocol for the multicast mode, the receiver 100 can selectively receive and decode desired BCG data.

In FIG. 1, the BCG server 150 transmits BCG data to registered receivers through the second gateway 120 in the multicast mode. The second gateway 120 supports the multicast mode. Once the receiver 100 registers itself with the multicast address of the BCG server 150, it can receive the BCG data from the BCG server 150 in the multicast mode.

In the case of BCG data transmittable in the unicast mode due to lower priorities thereof, the receiver 100 accesses a unicast access address in response to the user's request to receive the BCG data.

The receiver 100 gains access to the BCG server 150 through the third gateway 130 in response to the user's request, and then receives BCG data stored in the BCG server 150. The third gateway 130 supports the unicast mode. Also, the receiver 100 may request and receive all BCG data transmittable in the unicast mode or, when a query is supported, may selectively request and receive only desired BCG data.

At this time, for the data request, etc., a Simple Object Access Protocol (SOAP) or HTTP can be used between the BCG server 150 and the receiver 100.

The receiver 100 stores the received BCG data and displays the contents of the stored BCG data on the screen in response to the user's request.

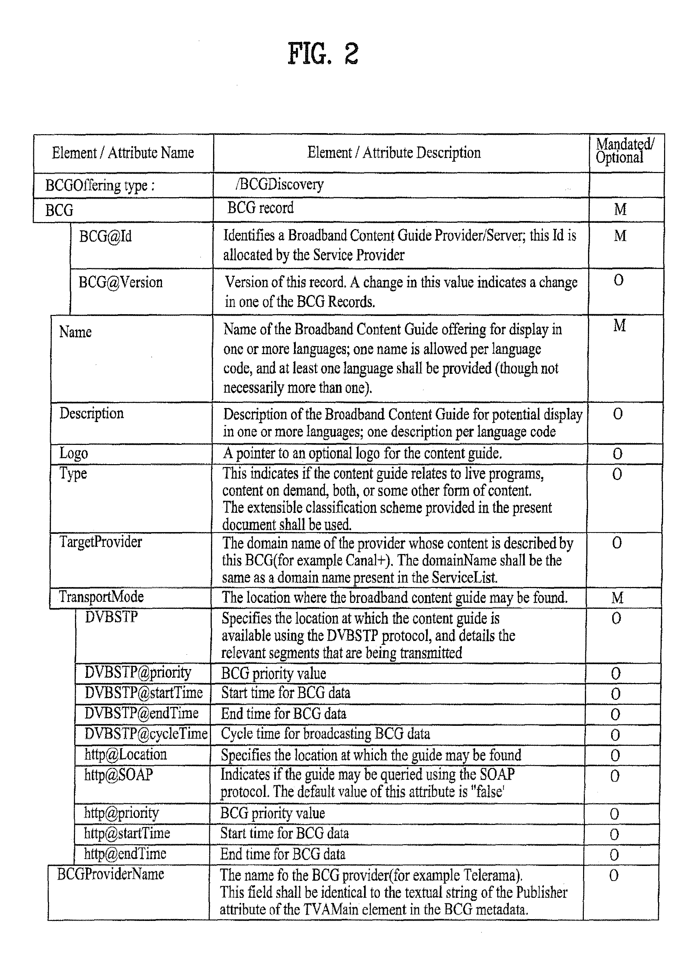

FIG. 2 shows an example of a BCG discovery record including priority information. The BCG discovery record of FIG. 2 includes priority-based BCG server connection information and transmission mode information, etc.

'BCGOffering type' is a BCGDiscovery table. 'BCG' represents BCG information.

'BCG@Id' represents an identifier of a BCG data unit, which is allocated by a service provider. As a result, the "BCG@Id' can be different depending on an identifier of a BCG provider/server.

'BCG@Version' includes version information of the BCG. A change in this version information means that BCG data was updated. 'Name' records a name of the BCG. The BCG name can be provided in one or more languages.

'Description' includes a description of the BCG. The description of the BCG can be provided in one or more languages.

'Logo' includes a pointer to a logo for the BCG.

'Type' includes information about the types of contents associated with the BCG. For example, the types of contents may be Live Program, Content on Demand (CoD) or others.

'TargetProvider' includes information about a domain name of a provider of a content described in the BCG.

'TransportMode' includes information about a location where BCG data may be found.

'DVBSTP' includes information about a location where BCG data is provided using the DVBSTP. 'DVBSTP@priority', 'DVBSTP@startTime', 'DVBSTP@endTime', and 'DVBSTP@cycleTime' include information about a priority of the BCG data provided using the DVBSTP, a start time and end time of information contained in the BCG data, and information about a transmission cycle of the BCG data, respectively.

'http@Location' includes information about a location where BCG data is provided using the HTTP. 'http@SOAP' includes information about whether the SOAP is used for the BCG data provided using the HTTP. The default value of this attribute is 'false'.

'http@priority', 'http@startTime', and 'http@endTime' include information about a priority of the BCG data provided using the HTTP, and a start time and end time of information contained in the BCG data, respectively.

'BCGProviderName' includes information about a name of a BCG provider.

In the BCG discovery record, the information of the `BCG', 'BCG@Id', 'Name' and 'TransportMode' is mandatory. Other than these, the information of the 'BCG@Version', 'Description', 'Logo', 'Type', 'TargetProvider', 'DVBSTP', 'DVBSTP@priority', 'DVBSTP@startTime', 'DVBSTP@endTime', 'DVBSTP@cycleTime', 'http@Location', 'http@SOAP', 'http@priority', 'http@startTime', 'http@endTime' and 'BCGProviderName' is optional.

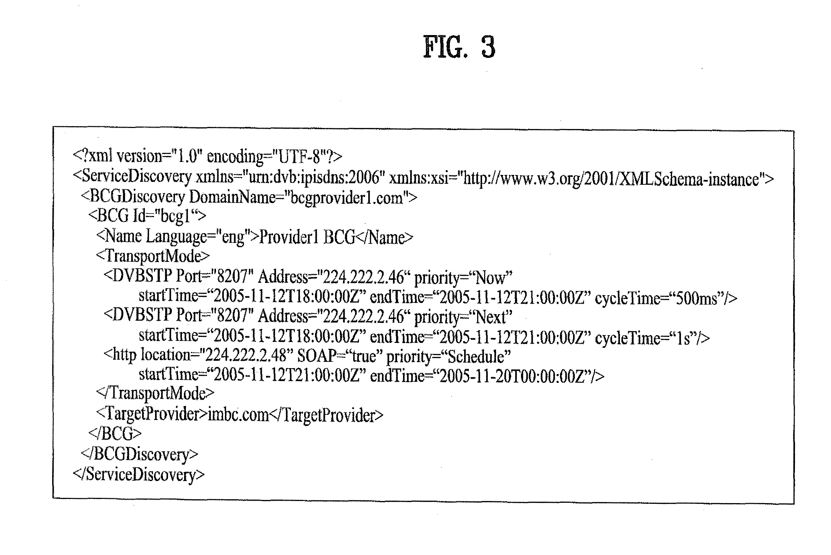

FIG. 3 shows an example of an extensible Markup Language (XML) expression of a BCG discovery record including discovery information based on priorities.

Name information "bcgprovider1.com" of a domain storing BCG data, BCG ID "bcg1", Name "Provider1 BCG", etc. can be seen from FIG. 3.

Information about a location where the BCG data may be found can be known from 'TransportMode' and the following elements. Information about a location where BCG data is provided using the DVBSTP, and so forth are included in a lower element 'DVBSTP' of the `TransportMode'.

In an example of FIG. 3, it can be seen that BCG data having a priority of a 'now' level is transmitted in the multicast mode at a port '8207' of an address '224.222.2.46'. The start time of information contained in the BCG data having the priority of the 'now' level is '2005-11-12 T18:00:00Z' and the end time thereof is '2005-11-12 T21:00:00Z'. The transmission period of this BCG data is '500ms'.

Also, it can be seen that BCG data having a priority of a 'next' level is also transmitted in the multicast mode at the port '8207' of the address '224.222.2.46'. The start time of information contained in the BCG data having the priority of the 'next' level is '2005-11-12 T18:00:00Z' and the end time thereof is '2005-11-12 T21:00:00Z'. The transmission period of this BCG data is '1s'.

Although the BCG data having the priority of the 'now' level and the BCG data having the priority of the 'next' level are shown in this example to be transmitted at the same address, they may be transmitted at different addresses according to different embodiments.

Information about a location where BCG data is provided using the HTTP, and so forth are included in a lower element 'http location' of the 'TransportMode'.

In the example of FIG. 3, it can be seen that BCG data having a priority of a 'schedule' level is transmitted in the unicast mode at an address '224.222.2.48'. Also, it can be seen from 'SOAP="true"' that the BCG supports the SOAP. The start time of information contained in the BCG data having the priority of the 'schedule' level is '2005-11-12 T21:00:00Z' and the end time thereof is '2005-11-20 T00:00:002'.

Domain name information 'imbc.com' of a content provider is included in `TargetProvider'.

The receiver 100 can know transmission mode information, connection information, etc. about BCG data by analyzing a BCG discovery record as in the example of FIG. 3, received from the service discovery server 140. The receiver 100 accesses the BCG server 150 using the transmission mode information, connection information, etc. and then receives the BCG data from the BCG server 150.

In the case of BCG data transmitted in the unicast mode, the receiver 100 receives the BCG data in response to the user's request, using information of 'http location' included in the BCG discovery record.

In the case of BCG data transmitted in the multicast mode, the receiver 100 receives the BCG data using information of 'DVBSTP' included in the BCG discovery record. In this case, the receiver 100 can register itself with a multicast address of the BCG server 150 using the IGMP and receive BCG data periodically transmitted from the BCG server 150.

In the case where information about priorities of BCG data is contained in a header area of the DVBSTP, which is a protocol for the multicast mode, the receiver 100 can selectively receive and decode desired BCG data.

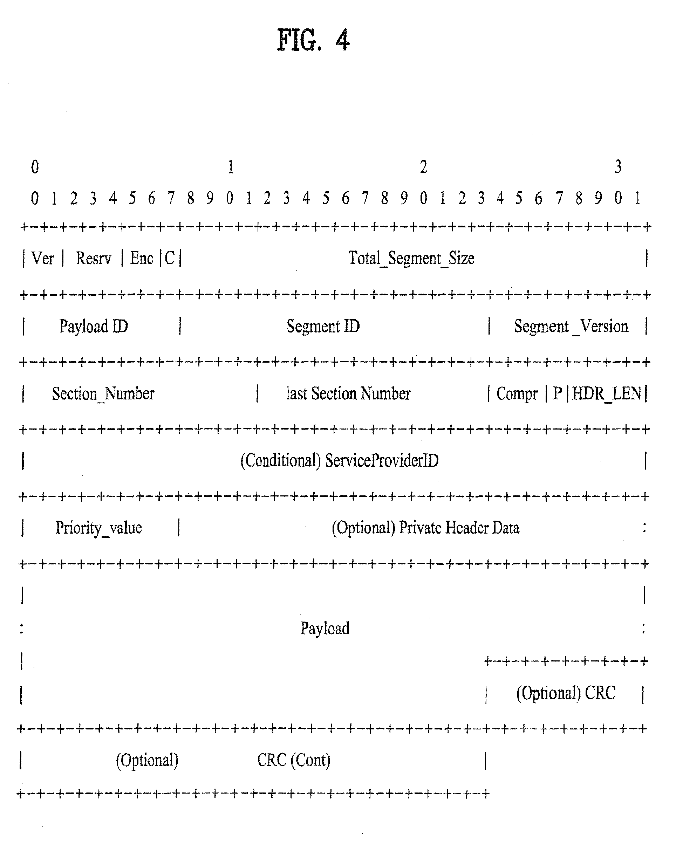

FIG. 4 shows a syntax of a DVBSTP including priority information according to one embodiment of the present invention.

'Ver' is a 2-bit field including protocol version information. 'Resrv' is a reserved field, and 'Enc' is a 2-bit field including information as to whether encryption has been used. 'C' is a Cyclic Redundancy Check (CRC) flag field. When the value of 'C' is 1, it indicates that a 32-bit CRC code is present at the tail of a packet. 'Total_Segment_Size' is a field indicating total segment size information in a byte unit.

'Payload ID' is an 8-bit field including information for identification of the type of data loaded in a payload. 'Segment ID' is a 16-bit field including data segment identification information. 'Segment_Version' is an 8-bit field including information about a current version of a segment.

'Segment_Number' is a 12-bit field including information about a current section number of the segment, and 'Last Section Number' is a 12-bit field including information about a last section number of the segment. 'Compr' is a 3-bit field including compression information of the data loaded in the payload. The contents of the compression information are defined in ETSI TS 102 034, which is a standard for the DVB-IP.

'P' is a 'ProviderID' flag, which is 1 when a 'ServiceProviderID' field is present in the header. 'HDR_LEN' is a 4-bit field including information about the length of 'Private Header'.

'ServiceProviderID' is a 32-bit field including service provider identification information. 'Priority_value' is an 8-bit field including information about priorities of BCG data loaded in the payload.

'Private Header Data' is a private field that is optional. A 'Payload' field is an area in which data of the packet is loaded. A 'CRC' field is optional and includes 32-bit CRC code information.

Using the priority information included in the header area as shown in FIG. 4, the receiver 100 selectively receives, decodes and stores desired BCG data, among BCG data units transmitted from the BCG server 150 in the multicast mode. Also, the receiver 100 displays information of the received BCG data on the screen in response to the user's request.

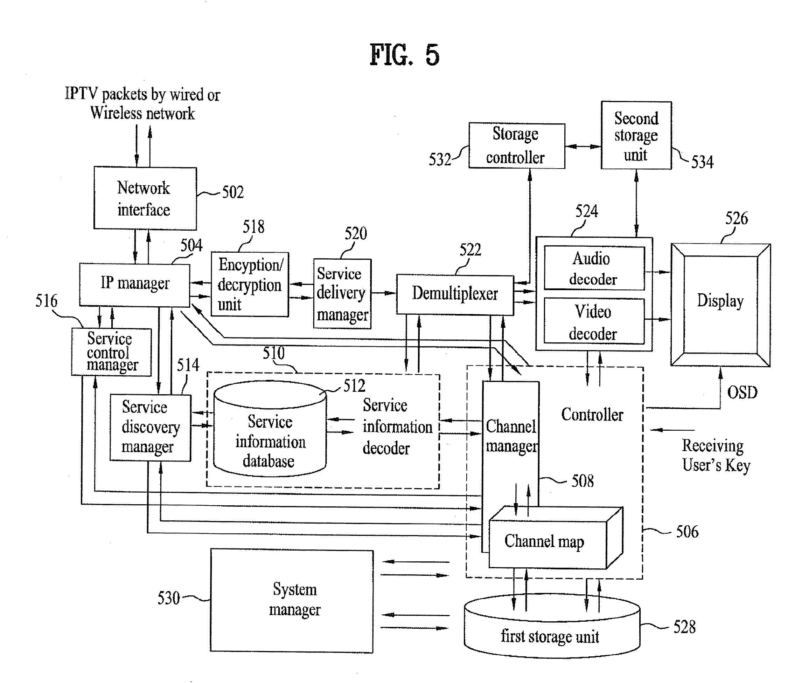

FIG. 5 is an example of a block diagram showing the configuration of a receiver for receiving and processing contents guide information based on priorities.

The receiver includes a network interface 502, IP manager 504, controller 506, channel manager 508, service information decoder 510, service information database 512, service discovery manager 514, service control manager 516, encryption/decryption unit (CAS/DRM unit) 518, service delivery manager 520, demultiplexer 522, audio/video decoder 524, display 526, first storage unit 528, system manager 530, storage controller 532, and second storage unit 534.

The network interface 502 receives packets from a network and transmits packets from the receiver to the network.

The IP manager 504 processes a packet which is received by the receiver and a packet which is transmitted by the receiver, according to an Internet Protocol that sets source and destination information.

The controller 506 provides a Graphic User Interface (GUI) for the user using an On Screen Display (OSD), etc., and controls the operation of the receiver in response to a user control signal received from the GUI. For example, if the controller 506 receives a key input for channel selection from the user, then it transmits the received key input to the channel manager 508.

The channel manager 508 creates a channel map. Also, the channel manager 508 selects a channel based on the key input received from the controller 506, and controls the service discovery manager 514. The channel manager 508 receives service information of the selected channel from the service information decoder 510 and performs setting of an audio/video Packet Identifier (PID) of the selected channel in the demultiplexer 522, etc. based on the received service information.

The service information decoder 510 receives and decodes service information or program information such as Program Specific Information (PSI) and Program and System Information Protocol (PSIP) information, outputted from the demultiplexer 522.

The service information decoder 510 decodes sections associated with service multiplexing, demultiplexed by the demultiplexer 522, and stores the decoded service information in the service information database 512.

The service discovery manager 514 controls information required for selection of a service provider. If the service discovery manager 514 receives a control signal for channel selection from the channel manager 508 or controller 506, then it searches for a service based on the control signal.

The service control manager 516 takes charge of selection and control of a service. For example, the service control manager 516 performs the service selection and control by using an IGMP or RTSP when the user selects a Live Broadcasting service as in an existing broadcasting system, and by using the RTSP when the user selects a service such as Video On Demand (VOD). The RTSP can provide a trick mode for real-time streaming.

A service-related packet received through the network interface 502 and IP manager 504 is transmitted to the encryption/decryption unit 518.

The encryption/decryption unit 518 performs a Conditional Access System (CAS) function and Digital Rights Management (DRM) function with respect to the packet received from the IP manager 504 or a packet received from the service delivery manager 520. As a result, the encryption/decryption unit 518 encrypts a packet to be transmitted and decrypts a received packet.

The service delivery manager 520 performs a real-time control for service data received according to the IP. For example, in the case of controlling real-time streaming data, the service delivery manager 520 controls the service data using a Real-Time Transport Protocol (RTP)/RTP Control Protocol (RTCP). The real-time streaming data is transmitted using the RTP, and the service delivery manager 520 parses the received data packet according to the RTP and outputs it to the demultiplexer 522. Also, the service delivery manager 520 feeds information received from the network back to a service discovery server using the RTCP.

The demultiplexer 522 demultiplexes a received packet into audio data, video data, Program Specific Information (PSI) data, etc. and transmits the audio data, video data, PSI data, etc. to the video/audio decoder 524 and the service information decoder 510, respectively.

The video/audio decoder 524 decodes the video data and audio data received from the demultiplexer 522. The video data decoded by the video/audio decoder 524 is provided to the user through the display 526 and the audio data decoded thereby is provided to the user through a speaker (not shown).

The first storage unit 528 stores system setup data, etc. This first storage unit 528 may be, for example, a NonVolatile RAM (NVRAM) or flash memory.

The system manager 530 controls the entire operation of the receiver system through power.

The second storage unit 532 receives and stores the video/audio data from the video/audio decoder 524 under the control of the storage controller 534.

The receiver accesses the service discovery server via the service discovery manager 514, IP manager 504 and network interface 502 and requests initial connection information about various servers from the service discovery server. The address of the service discovery server may be pre-stored in the receiver or inputted by the user.

The service discovery server transmits the initial connection information about the various servers to the receiver. The service discovery server includes priority-based BCG server connection information in a BCG discovery record, as shown in FIG. 2, and transmits the resulting BCG discovery record to the receiver.

The BCG discovery record transmitted from the service discovery server is received through the network interface 502 of the receiver. A packet including the BCG discovery record received through the network interface 502 is transmitted to the IP manager 504.

The IP manager 504 determines whether the destination of the received packet is the receiver and then transmits the packet to an appropriate manager block according to a transmission/reception protocol. Therefore, the IP manager 504 transmits the packet including the BCG discovery record to the service discovery manager 514.

The service discovery manager 514 analyzes the BCG discovery record to obtain priority-based BCG server connection information for reception of BCG data based on priorities from the BCG discovery record, and transfers the obtained BCG server connection information to the controller 506. Then, the service discovery manager 514 accesses a BCG server using the priority-based BCG server connection information under the control of the controller 506.

In the case of BCG data with a high priority transmittable from the BCG server in the multicast mode, the service discovery manager 514 have the receiver registered with a multicast address of the BCG server via the IP manager 504 and network interface 502 using the IGMP.

In the multicast mode, for example, the BCG server transmits the BCG data to the receiver according to the DVBSTP. The network interface 502 receives the transmitted BCG data and transfers it to the IP manager 504.

In the case of BCG data with a low priority transmittable from the BCG server in the unicast mode, the service discovery manager 514 accesses a unicast address of the BCG server via the IP manager 504 and network interface 502 in response to the user's request.

In the unicast mode, the BCG server transmits the requested BCG data to the receiver according to the HTTP. The network interface 502 receives the transmitted BCG data and transfers it to the IP manager 504. In the case where the communication between the BCG server and the receiver supports a query, the receiver may selectively request and receive BCG data.

The IP manager 504 transfers the received BCG data to the controller 506, which then decodes the received BCG data and may store the decoded BCG data in the first storage unit 528.

The controller 506 can display information of the received BCG data on the display 526 in response to the user's request, or may display the information of the received BCG data on the display 526 according to the user's setting. The information contained in the BCG data may include, for example, the rating of a content, sound multiplex information, caption information, etc. Alternatively, the controller 506 may express the information of the BCG data on the display 526 in graphics using an OSD, etc.

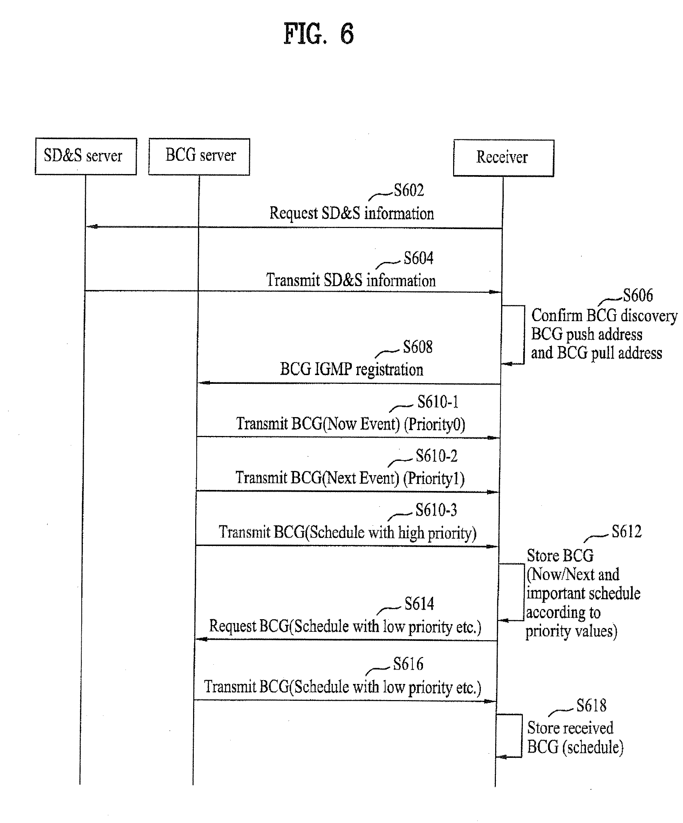

FIG. 6 is an example of a flowchart illustrating a process of processing contents guide information based on priorities. This figure shows the flow and sequence of data among a service discovery server, a BCG server and a receiver.

The receiver accesses the service discovery server and requests service discovery information therefrom (S602). The service discovery information includes connection information about each server. For example, the service discovery information may include service discovery record information including a BCG discovery record. The BCG discovery record may include connection information about the BCG server.

The service discovery server transmits the service discovery information including the connection information about each server to the requesting receiver in response to the request (604). The request and transmission of the service discovery information are carried out in the unicast mode.

The receiver confirms the BCG server connection information, etc. by analyzing the received BCG discovery record (S606). The BCG server connection information includes different access information (for example access addresses) and transmission modes of BCG data based on priorities of the BCG data. For example, by analyzing the BCG discovery record, the receiver may confirm connection information of BCG data of a high priority transmittable in the multicast mode, and connection information of BCG data of a low priority transmittable in the unicast mode.

First, a description will be given of the case of receiving BCG data transmitted in the multicast mode. Using the IGMP, the receiver registers itself with the BCG server for transmission of BCG data in the multicast mode (S608).

The BCG server can transmit BCG data to the receiver registered with the multicast address in the order of descending priorities (S610-1 to S610-3). The BCG server of FIG. 6 can transmit BCG data of 'now' and 'next' levels of high priorities and a 'schedule' level of a high priority in the multicast mode. In the multicast mode, the BCG server can transmit the BCG data using the DVBSTP.

The receiver receives and stores the transmitted BCG data (S612). At this time, the receiver may selectively receive and store the BCG data according to the priorities thereof.

Next, a description will be given of the case of receiving BCG data transmitted in the unicast mode. In response to the user's request, the receiver accesses the BCG server for transmission of BCG data in the unicast mode (S614). The receiver may request only BCG data units of low priorities or all BCG data units stored in the BCG server.

The BCG server transmits the requested BCG data to the receiver in response to the request (S616). In the unicast mode, BCG data can be requested and transmitted using the HTTP. In the case where a query is supported, the receiver may selectively request and receive only desired BCG data.

The receiver receives and stores the transmitted BCG data (S618). The receiver displays information of the stored BCG data on the screen according to the user's request or setting to provide the information to the user.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A digital broadcast transmission system comprising:
a first server for transmitting connection information about a server storing contents guide information based on priorities; and
a second server for transmitting the priority-based contents guide information in any one of a unicast mode and a multicast mode.

2. The digital broadcast transmission system according to claim 1, wherein the connection information is included in a Broadband Contents Guide (BCG) discovery record.

3. The digital broadcast transmission system according to claim 1, wherein the second server transmits contents guide information of a high priority, among the priority-based contents guide information, in the multicast mode, or transmits contents guide information of a low priority, among the priority-based contents guide information, in the unicast mode.

4. The digital broadcast transmission system according to claim 3, wherein information about the priority of the contents guide information transmitted in the multicast mode is included in a header area of a Digital Video Broadcasting Service Discovery & Selection Transport Protocol (DVBSTP).

5. The digital broadcast transmission system according to claim 3, wherein the connection information includes information about a transmission cycle of the contents guide information transmitted in the multicast mode.

6. The digital broadcast transmission system according to claim 1, wherein the connection information includes connection information about two or more servers providing the contents guide information according to the priorities, respectively.

7. A digital broadcast reception system comprising:
a network interface for transmitting and receiving signals to/from a network;
an Internet Protocol (IP) manager for transmitting and receiving an IP packet to/from the network interface among the signals received by the network interface;
a service discovery manager for obtaining, from the IP packet received by the IP manager, connection information about a server providing contents guide information based on priorities, and receiving the contents guide information from the server according to the priorities;
a controller for receiving the priority-based contents guide information from the service discovery manager; and
a display for displaying the priority-based contents guide information received by the controller.

8. The digital broadcast reception system according to claim 7, wherein, in a case of contents guide information of a high priority, among the priority-based contents guide information, the service discovery manager manages the digital broadcast reception system be to registered with the server providing the contents guide information of the high priority and receives the contents guide information of the high priority from the server in a multicast mode.

9. The digital broadcast reception system according to claim 8, wherein the contents guide information of the high priority is received from the server according to a DVBSTP.

10. The digital broadcast reception system according to claim 8, wherein the connection information includes information about a transmission cycle of the contents guide information transmitted in the multicast mode.

11. The digital broadcast reception system according to claim 7, wherein, in a case of contents guide information of a low priority, among the priority-based contents guide information, the service discovery manager requests the contents guide information of the low priority from the server providing the contents guide information of the low priority and receives the contents guide information of the low priority from the server in a unicast mode.

12. The digital broadcast reception system according to claim 11, wherein the contents guide information of the low priority is received according to a HyperText Transport Protocol (HTTP).

13. The digital broadcast reception system according to claim 7, wherein the connection information includes at least one of a start time and end time of the contents guide information.

14. A digital broadcast reception method comprising:
receiving connection information including information about a server providing contents guide information based on priorities;
accessing the server providing the priority-based contents guide information, using the connection information; and
receiving the priority-based contents guide information from the accessed server.

15. The digital broadcast reception method according to claim 14, further comprising:
registering a receiver receiving contents guide information of a high priority, among the priority-based contents guide information, with the server providing the contents guide information of the high priority; and
receiving the contents guide information of the high priority in a multicast mode.

16. The digital broadcast reception method according to claim 15, wherein information about the priority of the contents guide information received in the multicast mode is included in a header area of a DVBSTP.

17. The digital broadcast reception method according to claim 15, wherein the connection information further includes information about a transmission cycle of the contents guide information received in the multicast mode.

18. The digital broadcast reception method according to claim 14, further comprising:
requesting contents guide information of a low priority, among the priority-based contents guide information, from the server providing the contents guide information of the low priority; and
receiving the contents guide information of the low priority in a unicast mode.

19. The digital broadcast reception method according to claim 18, wherein contents guide information transmitted in the unicast mode is received according to an HTTP.

20. A digital broadcast transmission/reception method comprising:
requesting connection information including information about a server providing contents guide information based on priorities;
transmitting the connection information;
receiving the connection information, and accessing the server storing the priority-based contents guide information, using the connection information; and
receiving the priority-based contents guide information from the accessed server.
